Europäisches Patentamt

European Patent Office

Office européen des brevets

(19)

(11) **EP 0 617 431 B1**

(12) **EUROPEAN PATENT SPECIFICATION**

(45) Date of publication and mention
of the grant of the patent:
**14.05.1997 Bulletin 1997/20**

(51) Int Cl.6: **G21K 4/00**, C09K 11/84

(21) Application number: **94302171.7**

(22) Date of filing: **25.03.1994**

(54) **X-ray analysing apparatus**

Röntgenstrahlen-Analysegerät

Appareil d'analyse de rayon-X

(84) Designated Contracting States:
**DE FR GB**

(30) Priority: **25.03.1993 JP 67135/93**
**19.04.1993 JP 91683/93**
**19.04.1993 JP 91688/93**

(43) Date of publication of application:
**28.09.1994 Bulletin 1994/39**

(73) Proprietor: **SEIKO INSTRUMENTS INC.**
**Tokyo 136 (JP)**

(72) Inventors:
• **Sudo, Shuzo**
**Koto-ku, Tokyo (JP)**
• **Nakajima, Kunio**
**Koto-ku, Tokyo (JP)**

(74) Representative: **Sturt, Clifford Mark et al**
**J. MILLER & CO.**
**34 Bedford Row,**
**Holborn**
**London WC1R 4JH (GB)**

(56) References cited:
**EP-A- 0 187 066     US-A- 3 725 704**
**US-A- 4 739 172     US-A- 5 216 252**

## Description

The present invention relates to an X-ray apparatus using diffraction X-rays, fluorescent X-rays, or transmission X-rays to identify or chemically analyse a microarea of a sample non-destructively, eg. by scanning over a line or area of the sample surface.

Japanese Patent Provisional Publication No. SH059-72052 discloses one of examples of conventional X-ray analysing apparatus. In this mechanism, a hollow capillary whose inside cross section is a circle, an ellipse or a polygon and whose inner surface is parallel and mirror-finished is extended from an X-ray source to a sample fixed at the centre of a sample stage composed of a triaxial precise movement mechanism and a biaxial rotational mechanism which are combined. An X-ray diffraction image and fluorescent X-rays of a microarea of the sample are received by a film or a position sensitive proportional counter or a guide tube for measuring fluorescent X-rays. According to this structure, when a tiny and thin sample is to be analysed, the hollow capillary extending from the X-ray source is brought close to a vicinity of the sample, and a thin X-ray beam approximately as thin as an internal diameter of the hollow capillary is directed on the sample. The fluorescent X-ray emitted from the sample is received by the guide tube for measuring fluorescent X-rays and measured by a semiconductor detector arranged at the end of the guide tube. On the other hand, the diffraction X-rays are measured by the film or the position sensitive proportional counter. By the above procedure, materials in the microarea are identified and chemically analysed, and the sample is area-analysed or line-analysed by a linear movement mechanism.

Another prior art arrangement is, for example, disclosed by the Japanese Patent Provisional Publication No. SH061-22240. This prior art arrangement is composed of: a collimator for getting a thin X-ray beam incident on a minute part of a sample; a detachable spectrocrystal which is provided so that fluorescent X-rays emitted from a sample surface may be incident thereon; and an incident position sensitive X-ray detector in an arc provided so as to move around either a point which is symmetric to the microarea with respect to the surface of the spectrocrystal or the microarea. In this structure, when a tip of the collimator is brought to close vicinity to the sample, a fine X-ray beam is formed and the beam irradiates the microarea of the sample. The microarea emits fluorescent X-rays, which are reflected by the spectrocrystal and whose energy is measured from a difference in incident position by the position sensitive X-ray detector which is moved in an arc around the point symmetric to an X-ray irradiation area with respect to the spectrocrystal. On the other hand, diffraction X-rays are measured by the incident position sensitive X-ray detector which is moved in an arc, around the X-ray irradiation area. Thereby, materials in the microarea are identified and chemically analysed. The material is moved by a rectilinear movement mechanism to be area-analysed or line-analysed.

In a manipulator for manipulating a thin X-ray beam, the intensity of X-rays attenuates considerably depending on the energy and optical distance therefrom even when the beam energy is 5 keV or more. Therefore, to fabricate an X-ray optical system by using a visible light optical alignment bench for an X-ray optical element is difficult, so that a manipulator for exclusive use with X-ray optical systems to control the attenuation of the X-rays in the air to a minimum using vacuum technology has been used.

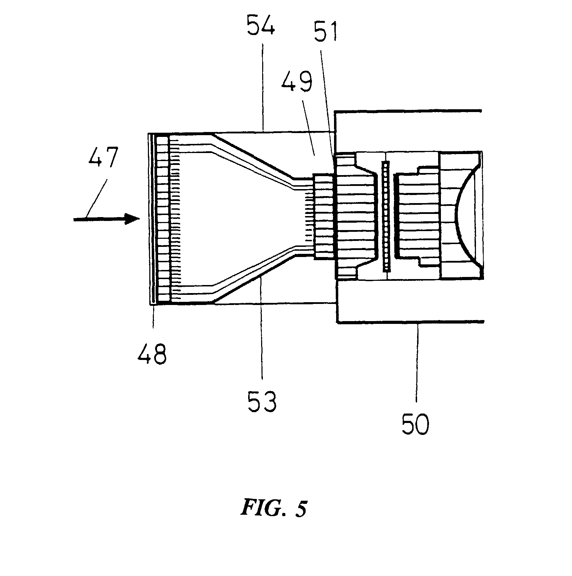

An exemplary known X-ray mirror manipulator is constructed as shown in figure 5. That is, it comprises a mirror mount tube 43 formed integral with the X-ray mirror, six vacuum-sealed micrometers 40, a vacuum tube 46 for fixing the micrometers in vacuum, a vacuum bellows 45 for securing the rectilinear movement of the mirror mount tube in the longitudinal direction, a linear stage mechanism 41, vacuum flanges and supports 39, and an X-ray window 42 for separating the atmosphere from a vacuum. The manipulator for an X-ray optical element performs bidirectional gates and bidirectional rectilinear movements on the inserted mirror mount tube with respect to the vacuum tubes by means of the six micrometers, and linearly moves the vacuum tube with respect to the flanges and supports by using the rectilinear stage mechanism. Accordingly, it is shown in figure 5 that the X-ray mirror in the mirror mount tube in a vacuum-sealed state can be aligned in pentaaxial directions by the operation through the X-ray window in the atmosphere.

Further, X-ray position detectors are of two types depending on the way they detect fluorescent X-rays, transmission X-rays or X-ray diffraction intensity: a pulse counting type in which X-ray light quanta are counted one by one and an integral counting type in which the intensity of X-rays received by the detector for a predetermined time period is integrated for counting. Typical examples of position sensitive detectors having a position detection function capable of recording one-dimensionally dimensionally or two-dimensionally location distribution of the X-ray density are a and a two-dimensional proportional counter tube, an X-ray film, an imaging plate, an X-ray television, a CCD X-ray sensor. Above all, the proportional counter tube which is one of the pulse counter type detectors has the excellent features of one-dimensional or two-dimensional position resolving power and also energy resolving power. On the other hand, the integral counting type detector is excellent in position resolving power for position detection, and an X-ray film is one of the examples which is most frequently used.

However, the Japanese Patent Provisional Publication No. SH059-72052 discloses an apparatus in which a hollow capillary leads X-rays from an X-ray source to the centre of a sample stage. Since this hollow capillary is a non-image forming optical element, it has a very large aberration. Further, when some distance of a few mm or more is kept between a sample and the hollow capillary, it is impossible to form X-rays into a thin X-ray beam having a diameter of the order of a few µm. In order to form such a thin X-ray beam in the above structure, it is necessary that the inner diameter of the capillary which is equivalent to an X-ray outgoing pupil should be not more than the size of the area to be measured and also that a tip of the capillary should be arranged in the close vicinity of the sample stage. However, if the tip of the capillary is in the vicinity of the sample stage, not only the size of a sample is restricted but also a rotational angle of the sample stage is restricted. If the thickness of the hollow capillary is made smaller in order to avoid the restriction on the rotational angle, the hollow capillary transmits the X-rays and the effective diameter of the X-ray beam exceeds the required value, which results in the problem that a microarea cannot be analysed.

Moreover, in the above prior art, a triaxial precise rectilinear movement mechanism is incorporated in a rotational mechanism, so that the size of the sample stage becomes smaller and a movement distance of the triaxial precise rectilinear movement mechanism is as short as a few millimetres or less.

Further, an apparatus disclosed by the Japanese Patent Provisional Publication No. SH061-22240 uses a collimator for applying a thin X-ray beam from an X-ray source to a sample surface. A microarea of the sample irradiated with the X-rays depends on an inner diameter of the collimator and a distance between the collimator and the sample surface. Therefor, in the same way as the former publication, obtaining a minimum diameter of the X-ray beam requires the collimator to have a small inner diameter and also to have the collimator and the sample surface in close vicinity. Therefore, also in this case, a rotational angle of the sample surface is restricted by the collimator itself, thereby being unable to have a large rotational angle for the sample surface. Moreover, since the embodiment of this publication has only one rotational axis of a sample, it is difficult to measure diffraction X-rays when the number of crystal grains is small in the microarea irradiated with the X-rays.

In the arrangements disclosed in the above two publications, the samples to be measured are necessarily small ones. The reason is, as mentioned above, that the sample scanning distance of the sample stage is short and that sample gate rotation is restricted by the collimator or the hollow capillary. Because these X-ray optical elements perform bidirectional rectilinear movements and utilise bidirectional gates with 6 micrometers, they waste degrees of freedom of movement. Next, since they gate the X-ray mirror only by the rectilinear mechanism of the micrometers, it is extremely difficult to operate the rectilinear components and the gate components independently of each other with respect to the pentaaxial alignment components of the X-ray mirror, and therefore it is difficult to perform alignment of the X-ray mirror. Further, since in figure 5 the rectilinear and gate operations of the mirror mount tube are performed inside the vacuum tube, it is necessary for each micrometer to have a long stroke 44 and for the vacuum tube to be large. Further, the flanges and supports must necessarily be large, so that the manufacturing cost increases and the manipulator itself becomes large and heavy, no matter how small the X-ray optical element is. Also in the case of designing an optimal optical system, even when the use of an X-ray mirror with a short operating distance and the insertion of a spatial filter midway in the optical distance determined by the X-ray mirror are necessitated, there are still cases where these requirements are limited by the size of the maipulator. Concerning the structural problem, in addition to the problem of the size of the system, the mounting and dismounting of the maipulator are not easy. Therefore, it is difficult to measure a thin film on a silicon wafer a few cm square or more, and the sample should be a minute chip.

Further, in an X-ray position detector, a method for detecting X-ray diffraction patterns depends on the wavelength of X-rays to be used and the kind of the X-rays, for example, characteristic X-ray and white X-rays. Generally, a one dimensional or two dimensional proportional counter tube which is a pulse counting detector has a defect that counting loss due to dead time occurs at high counting rates and moreover the proportion resolving power is not sufficient.

On the other hand, X-ray films and X-ray televisions which are integral counting detectors have defects of low sensitivity, a narrow dynamic range and poor linearity. These defects have been alleviated by an imaging plate, but after an X-ray image is recorded on the imaging plate, a He-Ne laser is used and a focused laser beam two-dimensionally scans over the imaging plate to read an X-ray latent image of the above X-ray image. The fluorescent intensity of the image is measured by a photo multiplier tube, and its output is multiplied by a logarithmic amplifier. Further, the output is converted into numeric values by A/D convertor, and then the image is recomposed by a computer. As a result the reading tends to take a long time and the required size of apparatus is increased.

Accordingly, an object of the present invention is to provide an improved microarea measuring apparatus, preferably having a high spatial resolving power and a high sensitivity.

EP-A-0 187 066 and US-A-3 725 704 both describe X-ray detectors comprising an X-ray fluorescent surface including terbium-doped gadolinium oxide sulphide.

The present invention (which is defined in the claims) has been made from the above-described view point.

In the present invention, the X-ray position detector comprises an X-ray fluorescent surface made of an X-ray fluorescent material which includes terbium-doped gadolinium oxide sulphide and whose surface density is

5 mg/cm$^2$ - 50 mg/cm$^2$.

Optionally the X-ray detector may include an image intensifier tube and optionally a CCD. Further, the fluorescent surface is preferably coupled to a tapered fibre plate in order to vary the area of a surface to be detected, and the image intensifier tube and the CCD (if used) are coupled by means of the fibre plate to make the best light efficiency.

Embodiments of the present invention will now be described with reference to the accompanying drawings, of which:

Figure 1 is a block diagram of an X-ray position detector according to the present invention;
Figure 2 shows relationships between the surface density of the X-ray fluorescent surface Gd$_2$O$_2$S:Tb, and the transmittance, the packing density and the emission intensity respectively of the Gd$_2$O$_2$S:Tb which are observed when the X-ray wavelength is 1.54 Å;
Figure 3 shows a relationship between the X-ray intensity and the response intensity of the X-ray diffraction two-dimensional detector which is observed when the X-ray wavelength is 1.54 Å;
Figure 4 shows a relationship between the X-ray wavelength between 0.7 Å and 0.2 Å, and the optimum surface density of the fluorescent screen Gd$_2$O$_2$S:Tb; and
Figure 5 shows a part of the structure of the X-ray diffraction detector in which the X-ray fluorescent surface and the tapered fibre plate are combined.

(Embodiment 1)

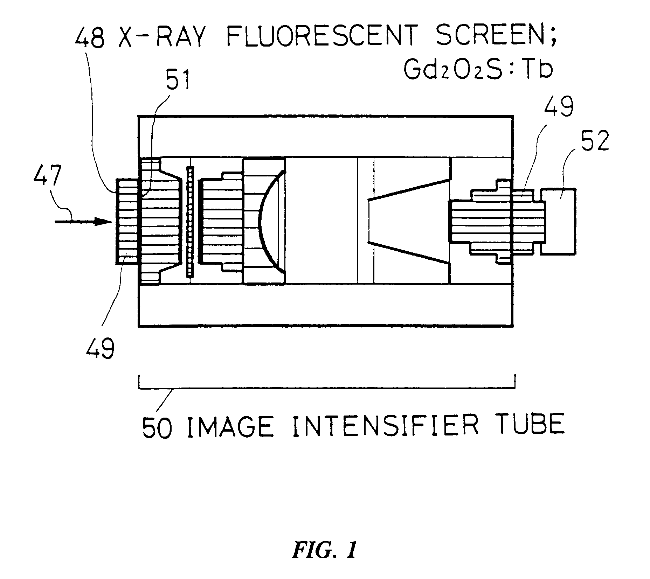

Embodiment 1 relates to an X-ray diffraction position detector. Figure 1 is a structural diagram of a detector in accordance with the invention. An X-ray fluorescent surface 48, and an image intensifier tube 50 and a CCD 52 are coupled with a fibre plate 49 to maximise the optical detection efficiency. Though the X-ray fluorescent surface used in this invention was made by a precipitation method, it can be also formed by a physical or chemical film forming method such as a coating method, deposition film forming method such as a coating method, deposition and sputtering by use of positional resolving power and a coating film thickness.

The X-ray fluorescent surface was designed so that the surface has high sensitivity and high position resolving power when the wavelength of the diffracted X-rays is within the range 0.07 nm to 0.2 nm (0.7 Å to 2 Å). The surface was formed on a fibre plate of 2 mm diameter and 3 mm thickness by the precipitation method with a fluorescent material, Gd$_2$O$_2$S:Tb. The thickness of the fluorescent surface can be determined from the relationship between the amount of X-rays absorbed by the fluorescent material Gd$_2$O$_2$S:Tb and the X-ray wavelength to be used, and is determined by the following equation: I/I$_0$ = exp [-$\mu$ (p/p$_0$)t], where I/I$_0$ is the transmittance of the X-rays of the fluorescent material, $\mu$ is a linear absorption coefficient of the used X-rays, p$_0$ is a density of the fluorescent material Gd$_2$O$_2$S:Tb, p is the filling rate (packing density) of the fluorescent material, and t is the thickness of the fluorescent surface. In order to realise high positional resolving power on the X-ray fluorescent surface, grain sizes of the fluorescent material were arranged to be almost uniform and actually were approximately 3 $\mu$m.

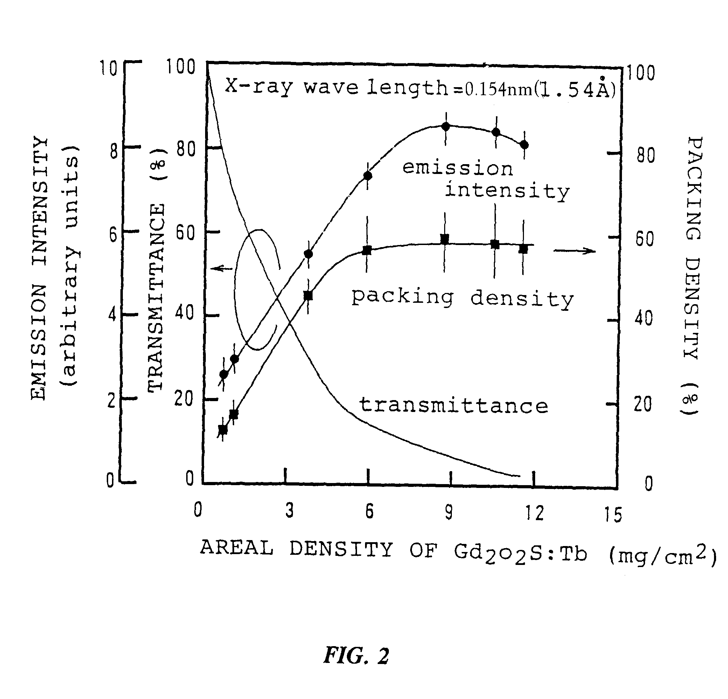

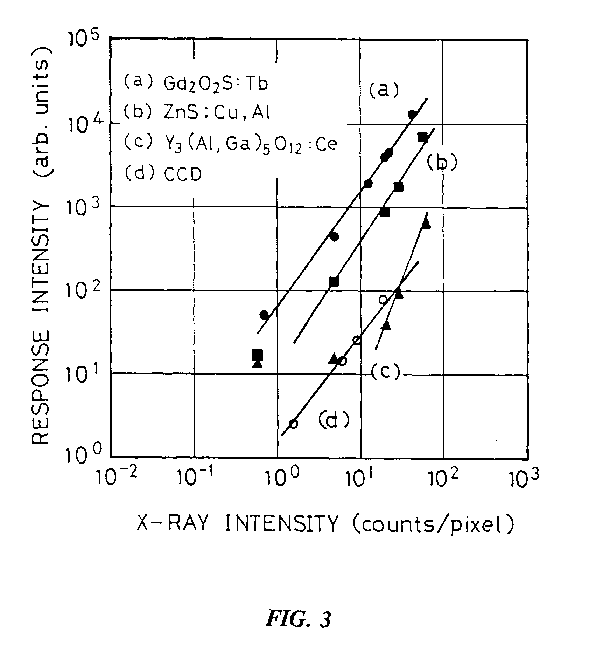

Figure 2 shows a relationship between the transmittance of the X-rays, with respect to a surface density of the Gd$_2$O$_2$S:Tb fluorescent surface, a relationship between the packing density and the same, and a relationship between an emission intensity of the X-ray fluorescent and the same respectively which are observed when the X-ray wavelength is 1.54 Å. When the surface density is 5 mg/cm$^2$ or less, the packing density is as low as 10% to 40% and the absorption of the X-rays and the emission efficiency of the fluorescence become small. On the other hand, when the surface density of the X-ray fluorescent surface Gd$_2$O$_2$S:Tb is 5 mg/cm$^2$ or more, the filling rate (packing density) is almost constant around 60%. Further, the irradiation direction of the X-rays and the direction of emission of visible light are opposite when the surface density exceeds approximately 10 mg/cm$^2$, so that if the film thickness of the X-ray fluorescent surface exceeds a predetermined value, the surface does not transmit the emitted light and the emission intensity apparently decreases. Therefore, in order to detect an X-ray diffraction pattern with an X-ray wavelength of 0.154 nm (1.54 Å), the optimum surface density is between 8 mg/cm$^2$ and 10 mg/cm$^2$. Figure 3 shows results of investigating sensitivity of the X-ray diffraction one-dimensional position detector having a structure shown in figure 1 by use of the X-ray fluorescent surface.

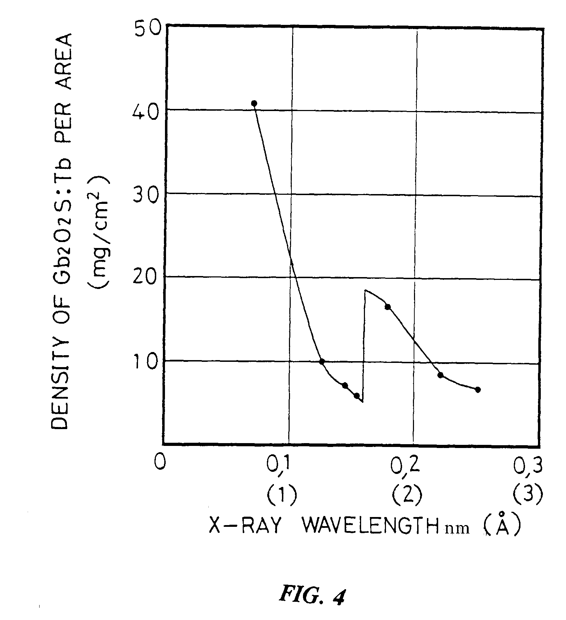

Figure 3 shows results of investigating a relationship between the X-ray intensity of the X-ray diffraction two-dimensional position detector having the Gd$_2$O$_2$S:Tb fluorescent surface and its response intensity at the wavelength of 0.154 nm (1.54 Å). For reference, each response intensity of two kinds of fluorescent surfaces and an X-ray CCD detector in addition to the Gd$_2$O$_2$S:Tb fluorescent surface was plotted. It was found out that when the surface density of the fluorescent screen is about 10 mg/cm$^2$, an X-ray photon responds to one pixel and the fluorescent screen has a dynamic range of about 2.5 digits. The positional resolving power was about 20 $\mu$m. Though embodiment 5 discloses a case when the X-ray wavelength is 1.54 Å. However, because of the relationship between the X-ray fluorescent surface and the X-ray absorption it is necessary to increase the surface density of the X-ray fluorescent surface as the wavelength decreases depending on the presence or absence of an X-ray absorption edge. Figure 4 shows the surface density of the fluorescent material Gd$_2$O$_2$S:Tb which is observed when the fluorescent intensity of the fluorescent screen with respect to the X-ray wavelength becomes strongest. When the wavelength of the diffraction X-rays is between 0.07 nm and 0.02 nm (0.7 Å and 0.2 Å), the fluorescent surface has a surface density ranging from 5 mg/cm$^2$ to 50 mg/cm$^2$. In a structure of the diffraction X-rays two-dimensional position detector shown in figure 1, the response sensitivity of the detector and the dynamic range were the same as those of a case that the X-ray wavelength is 0.154 nm (1.54 Å), but the position resolving power ranged between 15 μm and 60 μm because the thickness of the fluorescent surface depends on the used X-ray wavelength.

(Embodiment 2)

Based on the results shown in embodiment 1, the light receiving area can be expanded by combining the X-ray fluorescent surface 48 and a tapered fibre plate 53.

Figure 5 is a schematic diagram showing a combination of a tapered fibre plate 53 having a reduction rate of approximately one third and the X-ray fluorescent surface Gd$_2$O$_2$S:Tb. A case 54 has the X-ray fluorescent surface 48 and the tapered fibre plate 53 therein. In embodiment 6, an effective diameter of the image intensifier tube is 18 mm, so that a diameter of the effective X-ray fluorescent surface is 54 mm. In this case, light lost due to the tapered fibre plate is about 30% of that of the X-ray diffraction two-dimensional detector having a structure shown in figure 1, which considerably enhances the sensitivity.

On the other hand, as the position resolving power increases as the reciprocal of the reduction rate, it becomes approximately 60 μm when the X-ray wavelength is 0.154 nm (1.54 Å) as in embodiment 1. Further, when the X-ray wavelength is between 0.07 nm and 0.2 nm (0.7 Å and 2 Å) the position resolving power ranges from 45 μm to 150 μm. In embodiments 1 and 2, there was used an image intensifier tube of 18 mm effective diameter. However, if an image intensifier tube of approximately 40 mm effective diameter is used and combined with a tapered fibre plate with a reduction rate between one third and one fifth, the diameter of the X-ray receiving surface becomes between 120 mm and 200 mm, whereby it becomes possible to detect a large area X-ray diffraction pattern. Though embodiments 1 and 2 are referred to as embodiments of an X-ray diffraction position detector, the use of this position detector also enables intensity measurement and two dimensional observation of fluorescent X-rays and transmitted X-rays.

According to the present invention, by using the same apparatus structure as the above with transmission X-rays, diffraction X-rays, and fluorescent X-rays, it is possible to identify the sample material and measure the chemical composition of the material in a microarea easily and with high sensitivity.

## Claims

1. An X-ray detector, comprising an X-ray fluorescent surface (48) of terbium-doped gadolinium oxide sulphide having a surface density in the range 5 mg/cm$^2$ to 50 mg/cm$^2$.

2. An X-ray detector according to claim 1, wherein the detector comprises:

   the X-ray fluorescent surface (48),
   an image intensifier tube (50), and
   a charge combining device (CCD) (52).

3. The X-ray detector according to claim 1 or claim 2, wherein the X-ray fluorescent surface is optically coupled to an optic fibre assembly (49).

4. An X-ray detector according to claim 3, wherein the optic fibre assembly is in the form of a tapered fibre plate (53).

## Patentansprüche

1. Röntgendetektor, umfassend eine Röntgenfluoreszenzoberfläche (48) aus Terbium-dotiertem Gadoliniumoxid-sulfid mit einer Oberflächendichte im Bereich von 5 mg/cm$^2$ bis 50 mg/cm$^2$.

2. Röntgendetektor nach Anspruch 1, wobei der Detektor umfaßt:

   eine Röntgenfluoreszenzoberfläche (48),
   eine Bildverstärkerröhre (50), und
   eine ladungskombinierende Einrichtung (CCD) (52).

3. Röntgendetektor nach Anspruch 1 oder 2, bei welchem die Röntgenfluoreszenzoberfläche mit einer faseroptischen Baugruppe (49) optisch gekoppelt ist.

4. Röntgendetektor nach Anspruch 3, bei welchem die faseroptische Baugruppe in der Form einer Faserplatte (53) mit sich verjüngenden Fasern vorgesehen ist.

## Revendications

1. Détecteur de rayons X, comprenant une surface (48), fluorescente aux rayons X, de sulfure d'oxyde de gadolinium dopé au terbium ayant une densité en surface comprise entre 5 mg/cm$^2$ et 50mg/cm$^2$.

2. Détecteur de rayons X suivant la revendication 1, comprenant :

la surface (48) fluorescente aux rayons X
un tube (50) amplificateur d'image et
un dispositif à couplage de charge (CCD) (52).

3. Détecteur de rayons X selon la revendication 1 ou 2, dans lequel la surface fluorescente aux rayons X est couplée optiquement à un montage (49) de fibre optique.

4. Détecteur de rayons X selon la revendication 3, dans lequel le montage de fibre optique est sous forme d'un panneau (53) de fibres conique.

48 X-RAY FLUORESCENT SCREEN;
Gd₂O₂S:Tb

*FIG. 1*

*FIG. 2*

*FIG. 3*

**FIG. 4**

**FIG. 5**